**Europäisches Patentamt**

**European Patent Office**

**Office européen des brevets**

(19)

(11) Veröffentlichungsnummer: **0 029 586**
**B1**

(12) # EUROPÄISCHE PATENTSCHRIFT

(45) Veröffentlichungstag der Patentschrift:
**20.07.83**

(51) Int. Cl.³: **H 04 J 3/00,** H 04 Q 11/04

(21) Anmeldenummer: **80107202.6**

(22) Anmeldetag: **19.11.80**

(54) Verfahren zur Taktanpassung für ein digitales Tonsignal an einen Datenfluss.

(30) Priorität: **23.11.79 DE 2947226**

(43) Veröffentlichungstag der Anmeldung:
**03.06.81 Patentblatt 81/22**

(45) Bekanntmachung des Hinweises auf die Patenterteilung:
**20.07.83 Patentblatt 83/29**

(84) Benannte Vertragsstaaten:
**AT BE CH FR GB IT LI LU NL SE**

(56) Entgegenhaltungen:
**DE-A-2 814 351**
**DE-A-2 826 364**

,,**Elektronik**'', **Juni 1978, Heft 6, München U. Assmus, W. Bartel ,,Digitale Multiplexverfahren und ihre Bedeutung für ein digitales Netz''**, **S. 78 bis 83.**
,,**Frequenz''**, **Bd. 32, 1978, H. 10, S. 281 bis 287.**

(73) Patentinhaber: **SIEMENS AKTIENGESELLSCHAFT,**
**Berlin und München Wittelsbacherplatz 2,**
**D-8000 München 2 (DE)**
Patentinhaber: **AEG - TELEFUNKEN**
**AKTIENGESELLSCHAFT, Theodor-Stern-Kai 1,**
**D-6000 Frankfurt 70 (DE)**
Patentinhaber: **TE KA DE Felten & Guilleaume**
**Fernmeldeanlagen GmbH,**
**Thurn-und-Taxis-Strasse 10 Postfach 4943,**
**D-8500 Nürnberg 1 (DE)**

(72) Erfinder: **Bartel, Willy, Dipl.-Ing., Pupinweg 18,**
**D-6100 Darmstadt (DE)**
Erfinder: **Hessenmüller, Horst, Dipl.-Ing.,**
**Taunusstrasse 125, D-6101 Rossdorf (DE)**

(74) Vertreter: **Mehl, Ernst, Dipl.-Ing. et al, Postfach 22 01 76,**
**D-8000 München 22 (DE)**

## Verfahren zur Taktanpassung für ein digitales Tonsignal an einen Datenfluss

Die Erfindung betrifft ein Verfahren zur Taktanpassung für ein in digitaler Form vorliegendes Tonsignal an einen in Rahmen und Überrahmen organisierten Datenfluss zur digitalen Sprachübertragung in Telefoniequalität und mit Kennzeichenbits zur Kennzeichenübertragung, dessen Takt plesiochron zum Takt des digitalen Tonsignals ist, also die beiden Taktfrequenzen eine geringfügige Abweichung von z.B. $10^{-4}$ bis $10^{-7}$ haben.

Wird die Umsetzung eines analogen Tonrundfunksignals in digitale Form, z.B. mit dem Takt einer Digitalsignalverbindung für 2-Mbit/s-Signale (DSV2, bisher PCM30) gesteuert, ist die Einfügung des entstehenden Datenstromes in den Pulsrahmen der DSV2 und die Mitbenutzung der evtl. nachfolgenden weiteren digitalen Hierarchiestufen unproblematisch. Es sind jedoch Anwendungsfälle denkbar, bei denen die Analog/Digital-Umsetzung (A/D-Umsetzung) räumlich entfernt von den Geräten der DSV2 erfolgt und aus verschiedenen Gründen die Benutzung deren Taktes nicht möglich ist. Zur A/D-Umsetzung kann dann nur ein örtlich erzeugter Takt verwendet werden, der plesiochron zum Takt der DSV2 ist. In diesen Fällen ist eine Taktanpassung erforderlich.

Zum Zusammenfassen der Datenströme mehrerer digitaler Untersysteme mit zueinander plesiochronen Takten zu einem Obersystem sind mehrere Taktanpassungsverfahren bekannt. Diese Verfahren lassen sich in solche mit und ohne Informationsverlust einteilen. Wollte man für den genannten Anwendungsfall eine Taktanpassung mit Informationsverlust in Betracht ziehen, so würde dies, um den Wortsynchronismus nicht zu verlieren, das Weglassen oder Wiederholen eines ganzen Codewortes von Zeit zu Zeit bedeuten. Untersuchungen bei der Anmelderin haben ergeben, dass aus dieser Massnahme eine vom Zuhörer nicht zu akzeptierende Qualitätseinbusse des Tonsignals resultieren würde, wenn die Taktabweichung > $10^{-7}$ ist.

Taktanpassungsverfahren ohne Informationsverlust bei bitweiser Taktanpassung sind aus den „Nachrichtentechnischen Fachberichten", Nr. 42, 1972, PCM-Technik, VDE-Verlag GmbH Berlin-Charlottenburg, S. 235 bis 244, und aus der Zeitschrift „Elektronik", Heft 6/1978, S. 78 bis 83, bekannt. Dabei werden an vereinbarter Stelle im Rahmen — meist eines Obersystems — Leerbits eingefügt (positive Taktanpassung) oder Informationsbits ausgeblendet (negative Taktanpassung). Dieser Vorgang muss mittels im Pulsrahmen verfügbarer Zusatzkapazität dem Empfänger mitgeteilt werden, der die sendeseitig vorgenommene Manipulation rückgängig macht und den ursprünglichen Takt wieder erzeugt. Neben den Verfahren mit positiver Taktanpassung oder negativer Taktanpassung, bei denen beim ersten Verfahren die Taktfrequenz des Untersystems niedriger und beim zweiten Verfahren die Taktfrequenz des Untersystems höher als die Taktfrequenz des zur Verfügung stehenden Datenstromes ist, gibt es eine Kombination der beiden Möglichkeiten als positiv/negativ-Taktanpassung. Hierbei können relative Taktabweichungen in positiver und in negativer Richtung verarbeitet werden.

Das durch das „Taschenbuch der Fernmeldepraxis 1979", S. 13 bis 41, bekanntgewordene Multiplexsystem ist sowohl zur digitalen Übertragung von Tonsignalen als auch zur kombinierten Übertragung von Ton- und Fernsprechsignalen im Pulsrahmen der DSV2 geeignet.

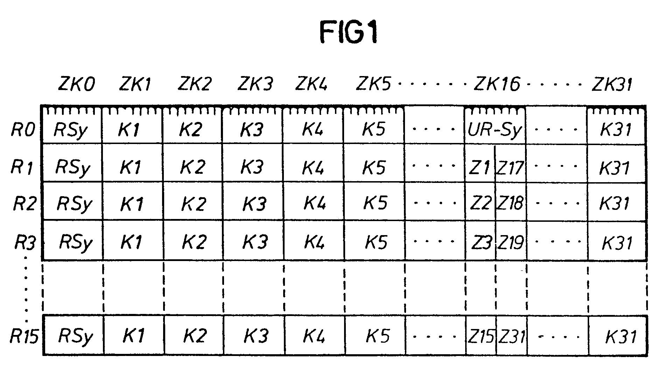

Fig. 1 zeigt den bekannten Aufbau des Pulsrahmens und des Überrahmens einer DSV2. Dieser Pulsrahmen von 125 µs Dauer enthält 256 bits; das entspricht einem Datenfluss von 2048 kbits/s. Der Pulsrahmen ist in 32 Zeitkanäle ZK0-ZK31 unterteilt. Der erste Zeitkanal ZK0 dient alternierend zur Übertragung eines Melde- und eines Rahmenkennungswortes (RSy). Der siebzehnte Zeitkanal ZK16 ist hauptsächlich zur Übermittlung der Wahlkennzeichen Z1-Z15, Z17-Z31 der dreissig Fernsprechkanäle K1-K15, K17-K31 vorgesehen. Sechzehn nacheinander gesendete Pulsrahmen R0-R15 bilden einen Überrahmen. Die Synchronisierung des Überrahmens erfolgt durch ein Überrahmensynchronisierwort ÜR-Sy im siebzehnten Zeitkanal ZK16 des ersten Pulsrahmens R0. Der Übersichtlichkeit wegen sind die sechzehn Pulsrahmen eines Überrahmens in Fig. 1 untereinander gezeichnet.

Der aus dem Taschenbuch der Fernmeldepraxis bekanntgewordene Vorschlag erlaubt die gemischte Belegung der DSV2 mit Fernsprech- und Tonkanälen. Die ersten Zeitkanäle ZK0 und die siebzehnten Zeitkanäle ZK16 werden dabei durch die Tonübertragung nicht angetastet.

Bei dieser digitalen Tonübertragung sind Kanäle hoher Qualität mit 15 kHz Bandbreite und solche einer mittleren Qualität mit 7 kHz Bandbreite zu berücksichtigen. Im ersten Fall beträgt die Abtastfrequenz 32 kHz und im zweiten Fall 16 kHz. Beides sind Vielfache der Abtastfrequenz von 8 kHz für Fernsprechsignale. Jeder Abtastwert mit den Schutzbits gegen die auf dem Übertragungsweg entstehenden Bitfehler beansprucht ein Wort von 12 bit Länge. In einem Pulsrahmen müssen daher für einen 15-kHz-Tonkanal vier Codeworte zu je 12 bit und für einen 7-kHz-Tonkanal zwei Codeworte zu je 12 bit untergebracht werden. Bei der Übertragung eines 15-kHz-Tonkanals werden deshalb sechs Zeitkanäle ZK1-ZK3, ZK17-ZK19 zu je 8 bit und bei der Übertragung eines 7-kHz-Tonsignals drei Zeitkanäle ZK1-ZK3 belegt. Sollen weitere Tonkanäle übertragen werden, so werden weitere Zeitkanäle ZK4-ZK6, ZK20-ZK22 bzw. ZK4-ZK6 usw. belegt. Die Bits von zwei aufeinanderfolgenden Codeworten werden zusätzlich zum Schutz gegen Doppelfehler auf dem Übertragungsweg ineinander verschachtelt. Ein 15-kHz-Tonkanal hat dadurch einen Informationsfluss von 384 kbits/s und es ist zwischen der Codier-/Decodiereinrichtung des Tonsignals und der DSV2 eine Schnittstelle mit einer Datenrate von 384 kbit/s (bei 7-kHz-Tonkanal: 192 kbit/s) vorgesehen.

. Das bekannte Verfahren hat den Nachteil, dass es nur eine synchrone Einfügung der Information codierter Tonkanäle in den Rahmen einer DSV2 vorsieht. Dies ist jedoch nicht immer möglich, wie z.B.:

— an einer digitalen Schnittstelle zwischen einem Rundfunkstudio und dem digitalen Netz der Postverwaltung, wenn die Takte eine zulässige Abweichung von $> 10^{-7}$ voneinander haben,

— in nationalen digitalen Netzen an den Schnittstellen zwischen Teilen dieser Netze, die nicht oder noch nicht synchron betrieben werden, wobei die Taktabweichung $> 10^{-7}$ ist, und

— beim Austausch digitaler Tonsignale zwischen internationalen Netzen, die zwar in sich synchron, gegeneinander jedoch plesiochron mit einer Taktabweichung $> 10^{-7}$ sind.

In der Zeitschrift „Frequenz", 32 (1978) 10, S. 281 bis 287 ist ein System PCM 30 D beschrieben, bei dem für jeden Kanal innerhalb eines Überpulsrahmens eine Stopfinformation in einer Hälfte des sechzehnten Kanals übertragen wird. Die Kanalgrenzen im Pulsrahmen bleiben während des Betriebs stets unverändert.

Der Erfindung liegt die Aufgabe zugrunde, ein Verfahren zur Taktanpassung anzugeben, bei dem die Codewortgrenzen der digitalen Tonsignale sich innerhalb der zugeteilten Zeitkanäle verschieben dürfen und empfangsseitig die zeitliche Lage der Codewortgrenzen leicht ermittelt werden kann.

Diese Aufgabe ist durch die im Hauptanspruch gekennzeichnete Erfindung gelöst.

Die Unteransprüche betreffen vorteilhafte Weiterbildungen der Erfindung.

Die Erfindung bietet den Vorteil, dass ein zur Übertragung synchron codierter Tonkanäle vorgesehenes Multiplexsystem ohne Veränderung des Rahmenaufbaus auch bei plesiochroner Betriebsweise der beteiligten Taktgeneratoren verwendet werden kann. Die Taktanpassung gemäss der Erfindung ermöglicht eine weitgehende Glättung des wiederzugewinnenden Taktes der digital übertragenen Tonsignale sowie dir für die Digital/Analog-Umsetzung notwendige Erkennung des Beginns der Codewörter des digitalen Tonsignals.

Ein weiterer Vorteil wird dadurch erzielt, dass innerhalb eines an sich plesiochron betriebenen Übertragungsnetzes Teile eines synchronen Netzes für digitale Tonsignalübertragung mit einer Bitrate von z.B. 192 kbit/s oder deren Vielfachem realisierbar sind, wodurch eine Vermittelbarkeit oder Durchschaltbarkeit im Zeitvielfach ermöglicht wird.

Vorteilhaft ist auch, dass die Erfindung eine zusätzliche Sicherheit gegen Übertragungsfehler schafft, weil sich die Bezugsdifferenz zwischen dem Beginn des Zeitkanals ZK1 und dem Ende des in diesem Zeitkanal überwiegend eingefügten Tonsignalcodeworts im störungsfreien Betrieb nur um den Wert ± 1 ändern darf und diese Änderung auch nur nach zwei gleichen, in zwei aufeinanderfolgenden Überrahmen ausgesendeten Taktanpassungssignalen erfolgen darf, wenn also eine positive bzw. negative Taktanpassung vorgenommen wurde. Übertragungsfehler können dadurch leicht erkannt und berichtigt werden.

Die Erfindung wird anhand von Fig. 2 bis 4 näher erläutert.

Fig. 2 zeigt den Aufbau des Datenflusses einer DSV2 bei einer plesiochronen 7-kHz-Tonsignalübertragung im synchronen Zustand,

Fig. 3 zeigt den Aufbau des Datenflusses bei einer positiven, und

Fig. 4 bei einer negativen Taktanpassung des digitalen 7-kHz-Tonsignales.

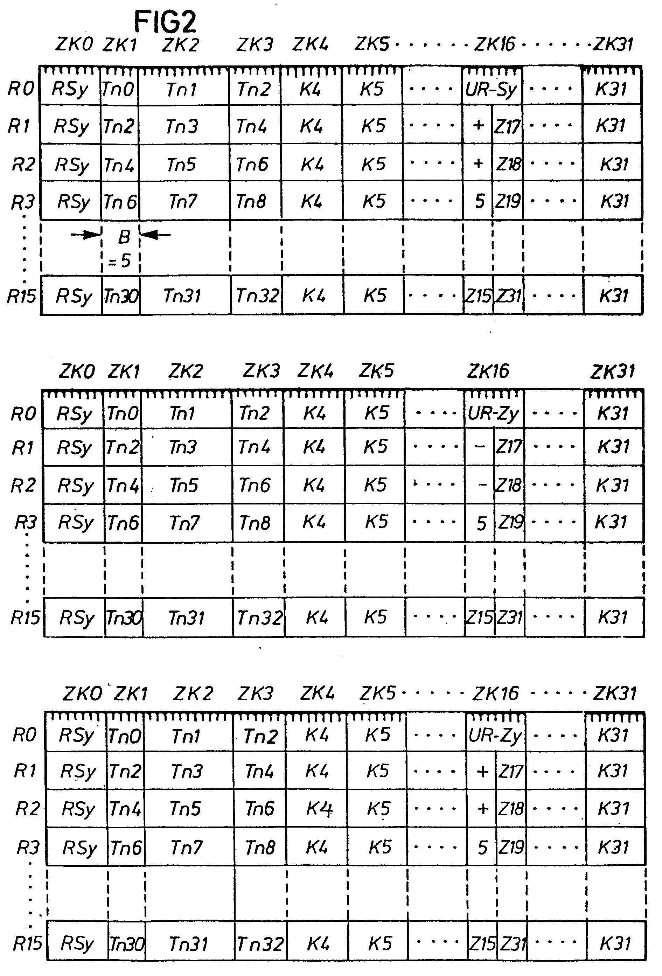

In Fig. 2 bis 4 sind jeweils drei zeitlich aufeinanderfolgende Überrahmen untereinander gezeichnet, die jeweils aus sechzehn Pulsrahmen R0-R15 bestehen, die wiederum aus zweiunddreissig Zeitkanälen ZK0-ZK31 zu je 8 bit aufgebaut sind. In jedem Überrahmen sind beispielsweise die Zeitkanäle ZK1-ZK3 mit zweiunddreissig Tonsignalwörtern oder Codeworten Tn0-Tn32 zu je 12 bit eines 7-kHz-Tonsignals belegt. Das Codewort Tn32 ergänzt das Codewort Tn0 des folgenden Überrahmens auf 12 bit. Durch die Belegung dieser drei Zeitkanäle ZK1-ZK3 mit dem codierten Tonsignal können die in den Zeitkanälen ZK16 freigewordenen 3 mal 4 Bitstellen (ursprünglich die Wahlkennzeichen Z1-Z3 zu je 4 bit in den Pulsrahmen R1, R2 und R3) zur Taktanpassung verwendet werden. Die ersten 8 bit in den Pulsrahmen R1 und R2 werden abwechselnd pro Überrahmen mit einem positiven und einem negativen Taktanpassungssignal $++$ bzw. $--$ beaufschlagt. Das Taktanpassungssignal $++$ bzw. $--$ verteilt sich also auf die Pulsrahmen R1 und R2. Die restlichen 4 Bitstellen im Pulsrahmen R3 geben digital codiert die im synchronen Zustand jeweils konstant bleibende Bezugsdifferenz B der Tonsignalcodewörter Tn1, Tn3, Tn5 bis Tn31 gegenüber dem Beginn des Zeitkanals ZK1 an. Ist beispielsweise die Bezugsdifferenz B = 5, so wird sie als Bitfolge OLOL übertragen. Das negative Taktanpassungssignal $--$ ist das invertierte positive Taktanpassungssignal $++$.

Mit den verfügbaren 4 Bitstellen im Pulsrahmen R3 können die bei 12stelligen Tonsignalwörtern möglichen 12 verschiedenen Bezugsdifferenzen B redundant übertragen werden. Die dauernde Übertragung der jeweils bestehenden Bezugsdifferenz ermöglicht es, nach einer Unterbrechung der Verbindung die relative Lage der codierten Tonsignalwörter empfangsseitig zu ermitteln.

Der synchrone Zustand „keine Taktanpassung notwendig" muss nicht gesondert übertragen werden, da die regelmässige Folge $++ \; -- \; ++ \; --$ usw. der abwechselnd positiven und negativen Taktanpassungssignale im Empfänger keine Reaktion auslöst.

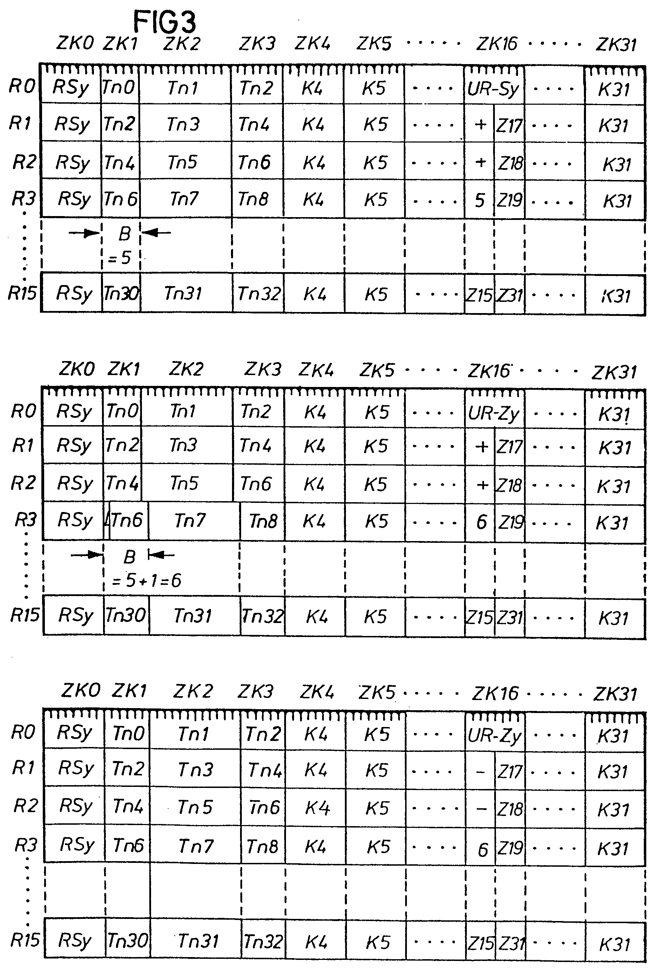

In Fig. 3 ist der Fall einer positiven Taktabweichung dargestellt, d.h. die Taktfrequenz des Tonsignals ist niedriger als die anteilige Taktfrequenz der DSV2. Wird die zeitliche Verschiebung beider Takte 1 bit, so werden erfindungsgemäss in zwei aufeinanderfolgenden Überrahmen positive Taktanpassungssignale übertragen. Die nach dem zweiten positiven Taktanpassungssignal folgende Bezugsdifferenz B erhöht sich von beispielsweise 5 bit um den Wert 1 auf 6 (OLLO) und an einer mit dem Empfänger vereinbarten Stelle, hier des ersten Bit nach dem Rahmenkennungswort RSy im Pulsrahmen R3, wird ein informationsloses Leerbit L eingefügt. Das Codewort Tn7 ist dadurch erstmalig um 6 bit gegenüber dem Beginn des Zeitkanals ZK1 im Pulsrahmen R3 verschoben. Die Synchronität ist dadurch wieder gegeben und es werden in den darauffolgenden Überrahmen abwechselnd und mit dem negativen Taktanpassungssignal beginnend positive und negative Taktanpassungssignale übertragen.

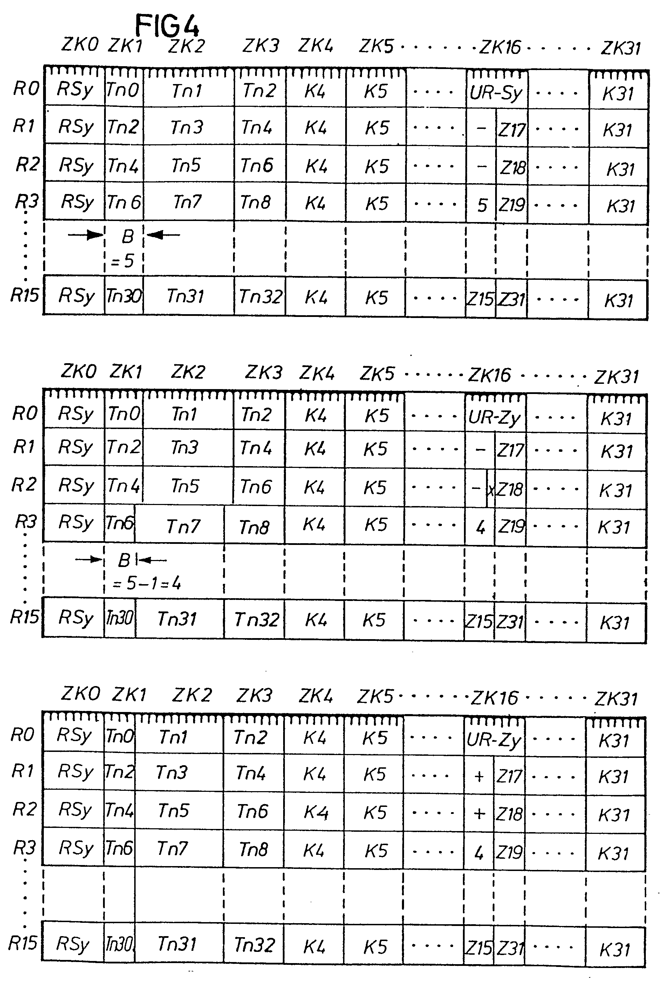

Bei der in Fig. 4 dargestellten negativen Taktabweichung ist die Taktfrequenz des Tonsignals grösser als die anteilige Taktfrequenz der DSV2. Um diesen Zustand zu signalisieren, werden in zwei aufeinanderfolgenden Überrahmen negative Taktanpassungssignale übertragen. Da ein aus dem Tonsignal ausgeblendetes Bit X ausserhalb der für das Tonsignal freigehaltenen Zeitkanäle ZK1-ZK3 übertragen werden muss, ist vereinbart, dass das zweite negative Taktanpassungssignal nur eine Länge von 7 bit hat und dass an der Stelle des ursprünglichen 8. Bit des Taktanpassungssignals dieses ausgeblendete Bit X übertragen wird. Das Codewort Tn6 innerhalb der Pulsrahmen R2 und R3 des zweiten Überrahmens in Fig. 4 hat dadurch nur eine Länge von 11 bit und wird durch das Bit X auf die notwendigen 12 bit ergänzt.

Das Codewort Tn7 innerhalb dieses Überrahmens hat nun eine Bezugsdifferenz B von 4 (OLOO). Diese jetzt bestehende Bezugsdifferenz wird im Pulsrahmen R3 erstmalig zum Empfänger übertragen.

Auch hier werden nach der Taktanpassung abwechselnd positive und negative (mit positiven beginnend) Taktanpassungssignale in den darauffolgenden Überrahmen mit der bis zur nächsten Taktanpassung konstant bleibenden Bezugsdifferenz B = 4 übertragen.

Bei Übertragung eines 15-kHz-Tonsignals beispielsweise in den sechs Zeitkanälen ZK1, ZK2, ZK3, ZK17, ZK18 und ZK19 sind zusätzlich 12 bit an den Stellen der Wahlkennzeichen Z17-Z19 frei. Diese können andere Aufgaben, wie z.B. die Übertragung von Alarmen, übernehmen.

Falls auch bei einem 7-kHz-Tonsignal eine Alarmübertragung gewünscht wird, kann als Taktanpassungssignal generell ein 7-bit-Wort verwendet werden. 1 bit steht dann hauptsächlich zu Sondersignalzwecken (Alarm) oder für die Übertragung bei negativer Taktanpassung für das ausgeblendete Bit X zur Verfügung. Diese Sondersignalübertragung ist möglich, da bei einer relativen Taktabweichung von beispielsweise $5 \cdot 10^{-7}$ im ungünstigsten Fall nur jedem 13. Überrahmen ein ausgeblendetes Bit X zu übertragen wäre.

Die Taktanpassungssignale ++ bzw. −− sind im Ausführungsbeispiel 8stellige bzw. 7stellige Codeworte, die zueinander komplementär sind. Ihre Hammingdistanz ist somit 8 bzw. 7. Daher lassen sich bis zu drei in diesen Codeworten enthaltene Fehler korrigieren.

## Patentansprüche

1. Verfahren zur Taktanpassung für ein in digitaler Form vorliegendes Tonsignal an einen in Pulsrahmen und Überrahmen organisierten Datenfluss zur digitalen Sprachübertragung in Telefoniequalität und mit Kennzeichenbits zur Kennzeichenübertragung, dessen Takt plesiochron zum Takt des digitalen Tonsignals ist, dadurch gekennzeichnet, dass Abtastproben des Tonsignals darstellende Codewörter in einem mehrere Fernsprechkanäle (K1, K2, K3 in Fig. 1) umfassende Zeitschlitz und in den entsprechenden Zeitschlitzen der nachfolgenden Pulsrahmen fortlaufend übertragen werden, dass die Taktanpassung innerhalb dieser Folge durch bitweises Verschieben erfolgt und dass an den bei Übertragung des digitalen Tonsignals über mehrere Fernsprechkanäle (K1, K2 und K3 in Fig. 1) freigewordenen, diesen zugeordneten Stellen (Z1, Z2 und Z3 in Fig. 1) der Kennzeichenbits (im ZK16) pro Überrahmen
— ein positives bzw. ein negatives Taktanpassungssignal (++ bzw. −− in Fig. 2 bis 4 in R1 und R2), ferner
— (jeweils im Pulsrahmen R3) die digital codierte Bitzahl der jeweiligen Bezugsdifferenz (B = 5 in Fig. 2, 5 bzw. 6 in Fig. 3 und 5 bzw. 4 in Fig. 4) der Tonsignalwörter (Tn1, Tn3, Tn5 bis Tn31) gegenüber dem Beginn des jeweils ersten (ZK1) der zur Übertragung des betreffenden Tonsignals benutzten Zeitkanäle (ZK1 bis ZK3)
— sowie zur negativen Taktanpassung zusätzlich das aus dem codierten Tonsignal ausgeblendete Bit (X in Fig. 4) übertragen werden.

2. Verfahren zur Taktanpassung nach Anspruch 1, dadurch gekennzeichnet, dass bei einer Übereinstimmung der Takte des Datenflusses und des digitalen Tonsignals (Fig. 2) in aufeinanderfolgenden Überrahmen
— die Bezugsdifferenz (B) konstant bleibt, und
— das Taktanpassungssignal (++ bzw. −−) von Überrahmen zu Überrahmen abwechselnd positiv und negativ ist.

3. Verfahren zur Taktanpassung nach Anspruch 1, dadurch gekennzeichnet, dass bei einer positiven Taktanpassung (Fig. 3)
— die Taktanpassungssignale (++) zweier aufeinanderfolgender Überrahmen beide positiv sind, und
— die gegenüber der vorhergehenden um den Wert 1 erhöhte Bezugsdifferenz (B = 5 + 1 = 6) erst im zweiten Überrahmen übertragen wird.

4. Verfahren zur Taktanpassung nach Anspruch 1, dadurch gekennzeichnet, dass bei einer negativen Taktanpassung (Fig. 4)
— die Taktanpassungssignale (−−) zweier aufeinanderfolgender Überrahmen beide negativ sind, und
— die gegenüber der vorhergehenden um den Wert 1 erniedrigte Bezugsdifferenz (B = 5 − 1 = 4) erst im zweiten Überrahmen übertragen wird, und

— zusätzlich das zweite negative Taktanpassungssignal (− −) um 1 bit gekürzt ist, und
— an dessen Stelle das aus dem codierten Tonsignal ausgeblendete Bit (X) übertragen wird.

## Claims

1. Method for the clock rate matching of a voice frequency signal occurring in digital form to a data flow which is organised in pulse frames and super-pulse frames, which serves for digital speech transmission of telephone quality, is provided with signalling bits for signalling transmission, and whose clock rate is plesiochronous to the clock rate of the digital voice frequency signal, characterized in that code words, which represent sample specimens of the voice frequency signal, are continually transmitted in a time slot covering a plurality of telephone channels (K1, K2, K3 in fig. 1) and in the corresponding time slots of the following pulse frames, that the clock rate matching within this sequence is effected by bitwise displacement, and that in each super-frame, at those locations (Z1, Z2, Z3 in fig. 1) of the signalling bits (in ZK16) which have been released when the digital voice frequency signal is transmitted over a plurality of telephone channels (K1, K2, K3 in fig. 1) and which are assigned to said channels, there is transmitted
— one positive and one negative clock rate matching signal (++ or − − in fig. 2 to 4 in R1 and R2), and
— in each case in pulse frame R3, the digital coded bit number of the particular reference difference (B = 5 in fig. 2, 5 and 6 in fig. 3 and 5 respectively, and 4 in fig. 4) of the voice frequency signal words (Tn1, Tn3, Tn5 to Tn31) relative to the beginning of the particular first (ZK1) of the time channels (ZK1 to ZK3) which are used to transmit the voice frequency signal in question, and
— for negative clock rate matching, the bit which has been gated out of the coded voice frequency signal (X in fig. 4).

2. Method for clock rate matching as claimed in claim 1, characterized in that in the event of the identity of the clock rates of the data flow and of the digital voice frequency signal (fig. 2) in consecutive super-frames
— the reference difference (B) remains constant, and
— the clock rate matching signal (++ or − −) is alternately positive and negative from one superframe to the next.

3. Method for clock rate matching as claimed in claim 1, characterized in that in the event of a positive clock rate matching (fig. 3)
— the clock rate matching signals (++) of two consecutive super-frames are both positive, and
— the reference difference (B = 5 + 1 = 6) which has been increased by the value of 1 relative to the previous difference is not transmitted until the second super-frame.

4. Method for clock rate matching as claimed in claim 1, characterized in that in the event of a negative clock rate matching (fig. 4)
— the clock rate matching signals (− −) of two consecutive super-frames are both negative, and
— the reference difference (B = 5 − 1 = 4) which has been reduced by the value 1 relative to the previous reference difference is not transmitted until the second super-frame, and
— in addition, the second negative clock rate matching signal (− −) is shortened by 1 bit, and
— in its place is transmitted the bit (X) which has been gated out of the coded voice frequency signal.

## Revendications

1. Procédé d'ajustement de rythme pour un signal audio existant sous forme numérique à un flux de données organisé en trames d'impulsions et supertrames, pour la transmission numérique de la parole en qualité téléphonie et comportant des bits indicateurs pour la transmission d'indicateurs, dont le rythme est plésiochrone par rapport au rythme du signal audio numérique, caractérisé par le fait que des mots de code représentant des échantillons du signal audio sont transmis de façon continue dans un intervalle temporel comprenant plusieurs canaux téléphoniques (K1, K2, K3 sur la fig. 1) et dans les intervalles temporels correspondants des trames d'impulsions suivantes, que l'ajustement de rythme à l'intérieur de cette séquence a lieu par décalage bit par bit, et que, aux emplacements (Z1, Z2 et Z3 sur la fig. 1) des bits indicateurs (dans ZK16) de chaque supertrame qui y sont associés et sont devenus libres lors de la transmission du signal audio numérique par l'intermédiaire de plusieurs canaux téléphoniques (K1, K2 et K3 sur la fig. 1), sont transmis:
— un signal d'ajustement de rythme positif ou négatif (++ ou − − sur les fig. 2 à 4 dans R1 et R2), plus
— respectivement dans la trame d'impulsions R3, le nombre de bits, codé numériquement, de la différence de référence respective (B = 5 sur la fig. 2, 5 ou 6 sur la fig. 3, et 5 ou 4 sur la fig. 4) des mots de signaux audio (Tn1, Tn3, Tn5 à Tn31) respectivement par rapport au début du premier (ZK1) des canaux temporels (ZK1 à ZK3) utilisés pour la transmission du signal audio concerné,
— ainsi que, en supplément pour l'ajustement de rythme négatif, le bit supprimé du signal audio codé (X sur la fig. 4).

2. Procédé pour l'ajustement de rythme suivant la revendication 1, caractérisé par le fait que, lors d'une coïncidence des rythmes du flux de données et du signal audio numérique (fig. 2) dans des supertrames successives, la différence de référence (B) reste constante, et le signal d'ajustement de rythme (++ ou − −) est alternativement positif et négatif de supertrame en supertrame.

3. Procédé pour l'ajustement de rythme suivant la revendication 1, caractérisé par le fait que, dans le cas d'un ajustement de rythme positif (fig. 3), les signaux d'ajustement de rythme (+ +) de deux supertrames successives sont tous deux positifs, et la différence de référence (B = 5 + 1 = 6), augmentée de la valeur 1 par rapport à la précédente, n'est transmise que dans la seconde supertrame.

4. Procédé pour l'ajustement de rythme suivant la revendication 1, caractérisé par le fait que, dans le cas d'un ajustement de rythme négatif (fig. 4), les signaux d'ajustement de rythme (– –) de deux supertrames successives sont tous deux négatifs, et la différence de référence (B = 5 – 1 = 4), diminuée de la valeur 1 par rapport à la précédente, n'est transmise que dans la seconde supertrame et, en plus, le second signal d'ajustement de rythme négatif (– –) est raccourci d'un bit et, à sa place, est transmis le bit (X) supprimé du signal audio codé.

# FIG1

| | ZK0 | ZK1 | ZK2 | ZK3 | ZK4 | ZK5 · · · · · · | ZK16 · · · · · | ZK31 |
|---|---|---|---|---|---|---|---|---|
| R0 | RSy | K1 | K2 | K3 | K4 | K5 | · · · · UR-Sy · · · · | K31 |
| R1 | RSy | K1 | K2 | K3 | K4 | K5 | · · · · Z1 Z17 · · · · | K31 |
| R2 | RSy | K1 | K2 | K3 | K4 | K5 | · · · · Z2 Z18 · · · · | K31 |
| R3 | RSy | K1 | K2 | K3 | K4 | K5 | · · · · Z3 Z19 · · · · | K31 |
| ⋮ | | | | | | | | |
| R15 | RSy | K1 | K2 | K3 | K4 | K5 | · · · · Z15 Z31 · · · · | K31 |

## FIG2

| | ZK0 | ZK1 | ZK2 | ZK3 | ZK4 | ZK5 | · · · · · | ZK16 | · · · · · | ZK31 |
|---|---|---|---|---|---|---|---|---|---|---|
| R0 | RSy | Tn0 | Tn1 | Tn2 | K4 | K5 | · · · · | UR-Sy | · · · · | K31 |
| R1 | RSy | Tn2 | Tn3 | Tn4 | K4 | K5 | · · · · | + Z17 | · · · · | K31 |
| R2 | RSy | Tn4 | Tn5 | Tn6 | K4 | K5 | · · · · | + Z18 | · · · · | K31 |
| R3 | RSy | Tn6 | Tn7 | Tn8 | K4 | K5 | · · · · | 5 Z19 | · · · · | K31 |
| ⋮ | →  B ← = 5 | | | | | | | | | |
| R15 | RSy | Tn30 | Tn31 | Tn32 | K4 | K5 | · · · · | Z15 Z31 | · · · · | K31 |

| | ZK0 | ZK1 | ZK2 | ZK3 | ZK4 | ZK5 | | ZK16 | | ZK31 |
|---|---|---|---|---|---|---|---|---|---|---|
| R0 | RSy | Tn0 | Tn1 | Tn2 | K4 | K5 | · · · · | UR-Zy | · · · · | K31 |
| R1 | RSy | Tn2 | Tn3 | Tn4 | K4 | K5 | · · · · | − Z17 | · · · · | K31 |
| R2 | RSy | Tn4 | Tn5 | Tn6 | K4 | K5 | · · · · | − Z18 | · · · · | K31 |
| R3 | RSy | Tn6 | Tn7 | Tn8 | K4 | K5 | · · · · | 5 Z19 | · · · · | K31 |
| ⋮ | | | | | | | | | | |
| R15 | RSy | Tn30 | Tn31 | Tn32 | K4 | K5 | · · · · | Z15 Z31 | · · · · | K31 |

| | ZK0 | ZK1 | ZK2 | ZK3 | ZK4 | ZK5 | · · · · · | ZK16 | · · · · · | ZK31 |
|---|---|---|---|---|---|---|---|---|---|---|
| R0 | RSy | Tn0 | Tn1 | Tn2 | K4 | K5 | · · · · | UR-Zy | · · · · | K31 |
| R1 | RSy | Tn2 | Tn3 | Tn4 | K4 | K5 | · · · · | + Z17 | · · · · | K31 |
| R2 | RSy | Tn4 | Tn5 | Tn6 | K4 | K5 | · · · · | + Z18 | · · · · | K31 |
| R3 | RSy | Tn6 | Tn7 | Tn8 | K4 | K5 | · · · · | 5 Z19 | · · · · | K31 |
| ⋮ | | | | | | | | | | |
| R15 | RSy | Tn30 | Tn31 | Tn32 | K4 | K5 | · · · · | Z15 Z31 | · · · · | K31 |

# FIG 3

|  | ZK0 | ZK1 | ZK2 | ZK3 | ZK4 | ZK5 | ····· | ZK16 | ····· | ZK31 |
|---|---|---|---|---|---|---|---|---|---|---|
| R0 | RSy | Tn0 | Tn1 | Tn2 | K4 | K5 | ···· | UR-Sy | ···· | K31 |
| R1 | RSy | Tn2 | Tn3 | Tn4 | K4 | K5 | ···· | + Z17 | ···· | K31 |
| R2 | RSy | Tn4 | Tn5 | Tn6 | K4 | K5 | ···· | + Z18 | ···· | K31 |
| R3 | RSy | Tn6 | Tn7 | Tn8 | K4 | K5 | ···· | 5 Z19 | ···· | K31 |
| ⋮ |  | → B ← $B = 5$ |  |  |  |  |  |  |  |  |
| R15 | RSy | Tn30 | Tn31 | Tn32 | K4 | K5 | ···· | Z15 Z31 | ···· | K31 |

|  | ZK0 | ZK1 | ZK2 | ZK3 | ZK4 | ZK5 | ···· | ZK16 | ···· | ZK31 |
|---|---|---|---|---|---|---|---|---|---|---|
| R0 | RSy | Tn0 | Tn1 | Tn2 | K4 | K5 | ···· | UR-Zy | ···· | K31 |
| R1 | RSy | Tn2 | Tn3 | Tn4 | K4 | K5 | ···· | + Z17 | ···· | K31 |
| R2 | RSy | Tn4 | Tn5 | Tn6 | K4 | K5 | ···· | + Z18 | ···· | K31 |
| R3 | RSy | Tn6 | Tn7 | Tn8 | K4 | K5 | ···· | 6 Z19 | ···· | K31 |
| ⋮ |  | → B ← $B = 5+1=6$ |  |  |  |  |  |  |  |  |
| R15 | RSy | Tn30 | Tn31 | Tn32 | K4 | K5 | ···· | Z15 Z31 | ···· | K31 |

|  | ZK0 | ZK1 | ZK2 | ZK3 | ZK4 | ZK5 | ···· | ZK16 | ···· | ZK31 |
|---|---|---|---|---|---|---|---|---|---|---|
| R0 | RSy | Tn0 | Tn1 | Tn2 | K4 | K5 | ···· | UR-Zy | ···· | K31 |
| R1 | RSy | Tn2 | Tn3 | Tn4 | K4 | K5 | ···· | − Z17 | ···· | K31 |
| R2 | RSy | Tn4 | Tn5 | Tn6 | K4 | K5 | ···· | − Z18 | ···· | K31 |
| R3 | RSy | Tn6 | Tn7 | Tn8 | K4 | K5 | ···· | 6 Z19 | ···· | K31 |
| ⋮ |  |  |  |  |  |  |  |  |  |  |
| R15 | RSy | Tn30 | Tn31 | Tn32 | K4 | K5 | ···· | Z15 Z31 | ···· | K31 |

# FIG 4

|  | ZK0 | ZK1 | ZK2 | ZK3 | ZK4 | ZK5 | · · · · · | ZK16 | · · · · · | ZK31 |
|---|---|---|---|---|---|---|---|---|---|---|
| R0 | RSy | Tn0 | Tn1 | Tn2 | K4 | K5 | · · · · | UR-Sy | · · · · | K31 |
| R1 | RSy | Tn2 | Tn3 | Tn4 | K4 | K5 | · · · · | − Z17 | · · · · | K31 |
| R2 | RSy | Tn4 | Tn5 | Tn6 | K4 | K5 | · · · · | − Z18 | · · · · | K31 |
| R3 | RSy | Tn6 | Tn7 | Tn8 | K4 | K5 | · · · · | 5 Z19 | · · · · | K31 |
| ⋮ | → B ← <br> = 5 |  |  |  |  |  |  |  |  |  |
| R15 | RSy | Tn30 | Tn31 | Tn32 | K4 | K5 | · · · · | Z15 Z31 | · · · · | K31 |

|  | ZK0 | ZK1 | ZK2 | ZK3 | ZK4 | ZK5 | · · · · · | ZK16 | · · · · · | ZK31 |
|---|---|---|---|---|---|---|---|---|---|---|
| R0 | RSy | Tn0 | Tn1 | Tn2 | K4 | K5 | · · · · | UR-Zy | · · · · | K31 |
| R1 | RSy | Tn2 | Tn3 | Tn4 | K4 | K5 | · · · · | − Z17 | · · · · | K31 |
| R2 | RSy | Tn4 | Tn5 | Tn6 | K4 | K5 | · · · · | − x Z18 | · · · · | K31 |
| R3 | RSy | Tn6 | Tn7 | Tn8 | K4 | K5 | · · · · | 4 Z19 | · · · · | K31 |
| ⋮ | → B ← <br> = 5−1=4 |  |  |  |  |  |  |  |  |  |
| R15 | RSy | Tn30 | Tn31 | Tn32 | K4 | K5 | · · · · | Z15 Z31 | · · · · | K31 |

|  | ZK0 | ZK1 | ZK2 | ZK3 | ZK4 | ZK5 | · · · · · | ZK16 | · · · · · | ZK31 |
|---|---|---|---|---|---|---|---|---|---|---|
| R0 | RSy | Tn0 | Tn1 | Tn2 | K4 | K5 | · · · · | UR-Zy | · · · · | K31 |
| R1 | RSy | Tn2 | Tn3 | Tn4 | K4 | K5 | · · · · | + Z17 | · · · · | K31 |
| R2 | RSy | Tn4 | Tn5 | Tn6 | K4 | K5 | · · · · | + Z18 | · · · · | K31 |
| R3 | RSy | Tn6 | Tn7 | Tn8 | K4 | K5 | · · · · | 4 Z19 | · · · · | K31 |
| ⋮ |  |  |  |  |  |  |  |  |  |  |
| R15 | RSy | Tn30 | Tn31 | Tn32 | K4 | K5 | · · · · | Z15 Z31 | · · · · | K31 |

13